# EUROPEAN PATENT APPLICATION

(11) **EP 2 439 718 A1**
(43) Date of publication of application: **11.04.2012**
(21) Application number: 10178202.7
(22) Date of filing: 22.09.2010
(51) Int. Cl.: G09B 9/02, G09B 19/16, G09B 5/00, G09B 7/00

(54) **Vehicle simulation system and procedure integrated training**

(71) Applicant: Axis Flight Simulations Systems, 8403 Lebring (AT); Infowerk Multimedia GmbH, 6170 Zirl (AT); Farnair Training GmbH, 7100 Neusiedl/See (AT)
(72) Inventor: Haas, Alfred, 4107, Ettingen (CH); Rossmann, Martin, 8074, Grambach (AT); Lotter, Hans-Jörg, Ing., 6170, Zirl (AT)
(74) Representative: Rupp, Christian

(57) **Abstract**

The invention provides a method for computer based teaching of features, functioning and/or operation of a vehicle, comprising: simulating vehicle features, behavior, results of interactions and/or at least one failure scenario, storing training material, e.g. vehicle schematics, operation protocols, training examples, flow and/or operation charts, schedules, and/or workflows, accepting information on a training session, setting the vehicle simulation to a predefined state for the training session, accepting an user input representing an interaction of a user with the vehicle, determining the interaction's effect on the vehicle by the simulation, simulating the interaction and its effect on the vehicle, determining whether the interaction adheres to a protocol for the training session, e.g. whether the interactions performed to deal with a scenario adhere to the protocol for handling the scenario, and, in case the user interaction does not adhere to the protocol, influencing the simulation.

## Description

The invention is in the field of vehicle simulation systems, e.g. aircraft, train or construction vehicle simulating systems. These systems can be used in the training of vehicle operators, such as pilots, where the operator as a trainee has to be trained for operating a vehicle.

The invention also discloses a new training method called "Procedure Integrated Training" (PIT). This method allows integrating theoretical with practical training from the beginning and also, in turn, enables vehicle simulators to be used efficiently during the training.

Classically, the training of a vehicle operator is divided into stages. In early stages, the training is normally orientated towards technical aspects and systems of a target vehicle, the vehicle the trainee should be trained for, where functions and design of the relevant or all systems is explained from a technical point of view. In a later stage, the trainee is then allowed to practically apply the knowledge learned from earlier stages when he is allowed to use a vehicle simulator, which provides a detailed representation of the target vehicle and allows using the vehicle functions and controls.

Generally, a vehicle simulator is an artificial recreation of the target vehicle and sometimes various aspects of its environment. This may include the functionalities that govern how the vehicle moves, how it reacts when its systems are controlled by the operator and/or how it reacts to its environment. The vehicle simulator also simulates how the vehicle behaves if the operator interacts with the vehicle control elements.

Of course, the vehicle simulator can also be used in the design and development of a vehicle and for research into vehicle characteristics, control qualities and vehicle behavior under a variety of influences.

The vehicle simulator may comprise hardware, which realistically models physical aspects of the target vehicle. Examples for such vehicle simulators are simple replica of cockpits for familiarization purposes up to complex cockpit simulations with detailed cockpit replications with all controls for vehicle systems and systems simulating the outside world. The vehicle simulator may also include hardware to simulate the motion of the vehicle in response to operator control but also movements resulting from vehicle external factors.

Further, the vehicle simulator provides a simulating unit controlling the behavior of the simulator by evaluating the performance of the vehicle simulator systems and controlling the vehicle simulator in response to, e.g., operator input or parameters representing, e.g., environmental influences on the vehicle or states of vehicle systems.

In respect to aircrafts, the vehicle simulator can for example be a Full Flight Simulator (FFS), a Flight Training Device (FTD) or a Flight and Navigation Procedure Trainer (FNPT).

Training the trainee in stages, as laid out above, is rather tiresome for the trainee, as the trainee is required to learn many theoretical facts on the target vehicle before he is able to really apply the learned knowledge in practice.

The classical method for training relies on the trainee getting a thorough understanding of the detailed function of all vehicle systems first. Some systems are described in great detail and some facts and figures are normally beyond the required knowledge of an operator. After this part of the theoretical training, and after passing tests for the theoretical training, the trainee remains in the classroom for additional theoretical items (e.g. performance, mass and balance, limitations and procedures).

During the training, e.g. for learning (flight) procedures, a certain amount of time is spent working, e.g., in a cockpit mock-up or in a cockpit procedure trainer (CPT), i.e. representations of the operator's working environment with none or limited functionality or simulation capabilities. This is the first time during the training that the trainee can work together with others as a team. After the theoretical phase, the training continues on the vehicle simulator. During this phase, the operation of the systems under normal, abnormal and emergency situations and also the operation of the vehicle itself is trained.

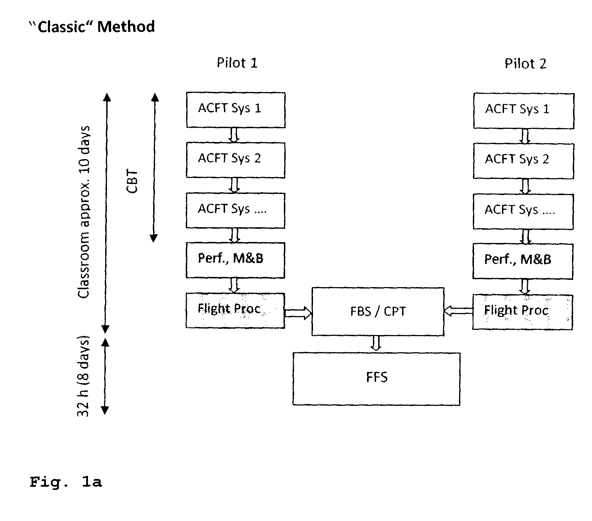

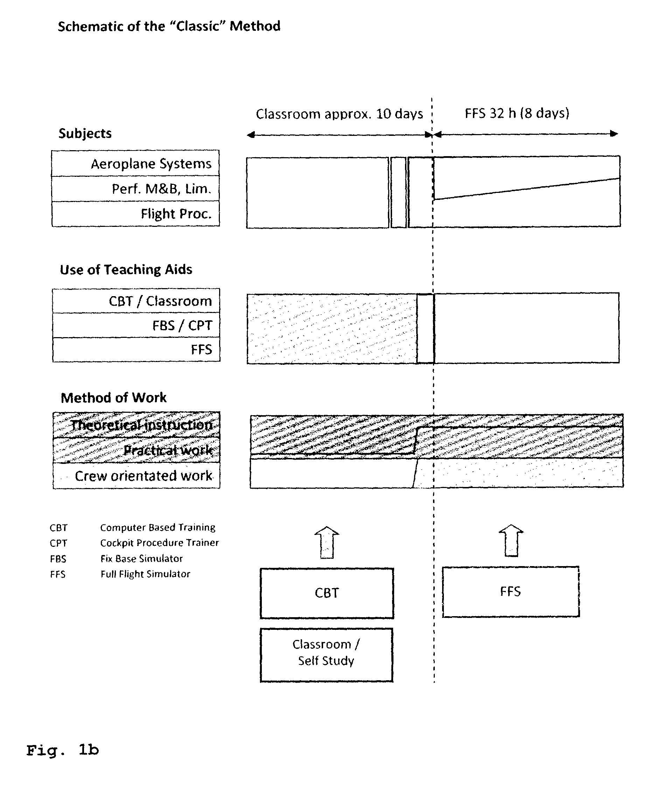

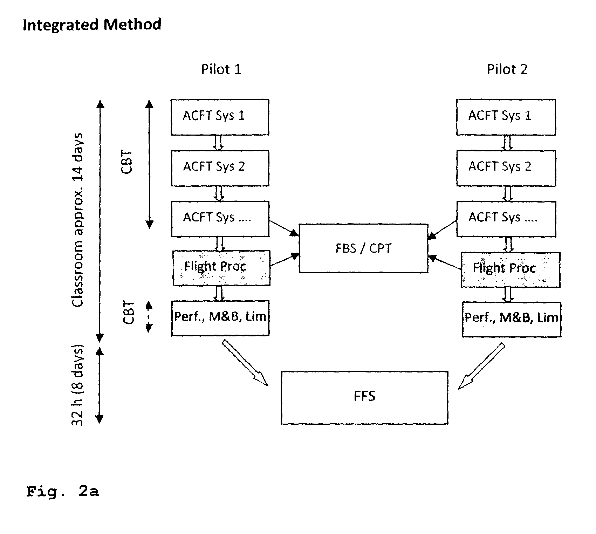

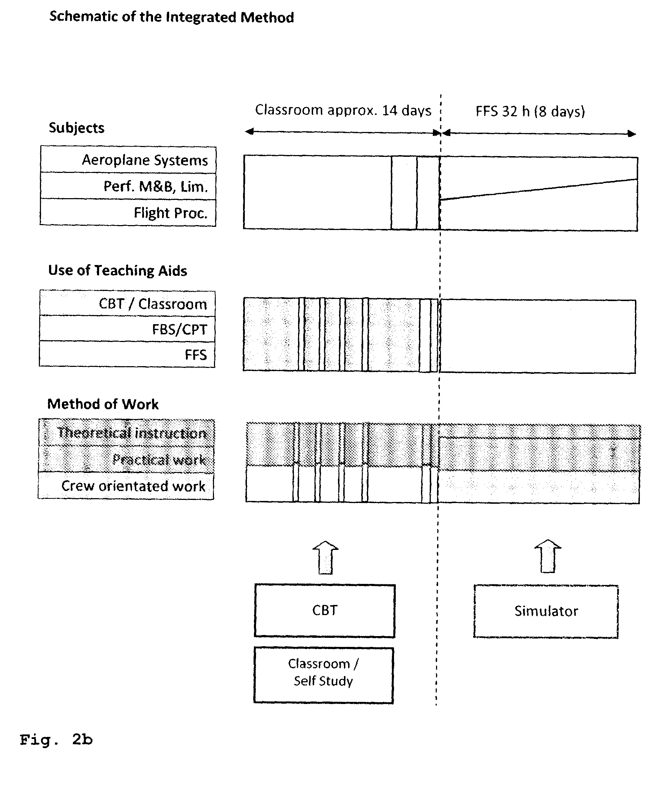

A slightly improved method similar to the classic training was introduced. The major difference is that the representations of the operator's working environment are introduced at an earlier stage. Some basic procedures and system training is done. Thereafter, the training is continued in the vehicle simulator as in the classic training. The advantage of having trained some procedures in the cockpit procedure trainer is apparent, but normally quiet minimal. Schematic illustrations of the classic method and the slightly improved method are shown in **Figs. 1a**, **1b**, **2a** and **2b**.

Especially in the case of aircraft operators, the vehicle operator today has to be a system manager and has to be able to deal with operating the target vehicle under even the most adverse conditions. It is hence beneficial to allow the trainee to receive a practical training throughout the training (e.g. a type rating training).

To prepare the vehicle operators for today's requirements, the aspect of the vehicle systems but also an increasing amount of other aspects, such as e.g. team management, has to be taken into consideration when designing a training plan and training sessions for it. The object is hence to allow training of the operator in a way that allows him to practice operation of the target vehicle as it is expected from the operator during everyday operation.

The Procedure Integrated Training aims at training the operator from the operator perspective, i.e. the whole training is based on procedures instead of detailed technical aspects. Of course, all vehicle systems and their functions are trained, but the method for teaching is focused on the view from the working place of the operator, e.g. the cockpit, to the vehicle systems (inside-to-outside-approach) and not from the vehicle systems to the working place of the operator as it would be the classical approach.

Training material should therefore be repeated several times under different aspects and practical work is integrated into the learning process. Compared to the classic training, wherein the vehicle systems are explained in early stages of the training and in sequence, normally no repetition and therefore consolidation of the taught topics is possible. As a result, by the time the trainee needs to apply the learned knowledge during practical work in the vehicle simulator, a part of the acquired knowledge is already lost. Further, as time on the simulator is typically costly, only the cockpit preparation and some very basic procedures are normally trained on the simulator.

The use of training aids such as computer-based learning systems (LS) (e.g., Computer Based Training, CBT) helps to reduce the costs of training as less instructor time and time on the vehicle simulator (e.g., by using a cockpit procedure trainer (CPT)) is needed.

The new method is based on the following key issues:
- The learning system is regarded as the center and the main driver of the training (i.e., throughout the entire training process).
- The training is directed from the environment the operator works in, e.g. the cockpit, towards the vehicle systems (inside-to-outside-approach).
- The training is based on consolidation through repetition.
- The training has to take into account daily requirements of the operator's duty.
- During the training, it is also advantageous if the operator works as a team with others where necessary. Team management aspects are integrated into the method, respectively.

The new training method is also designed to be in conformity with official regulations.

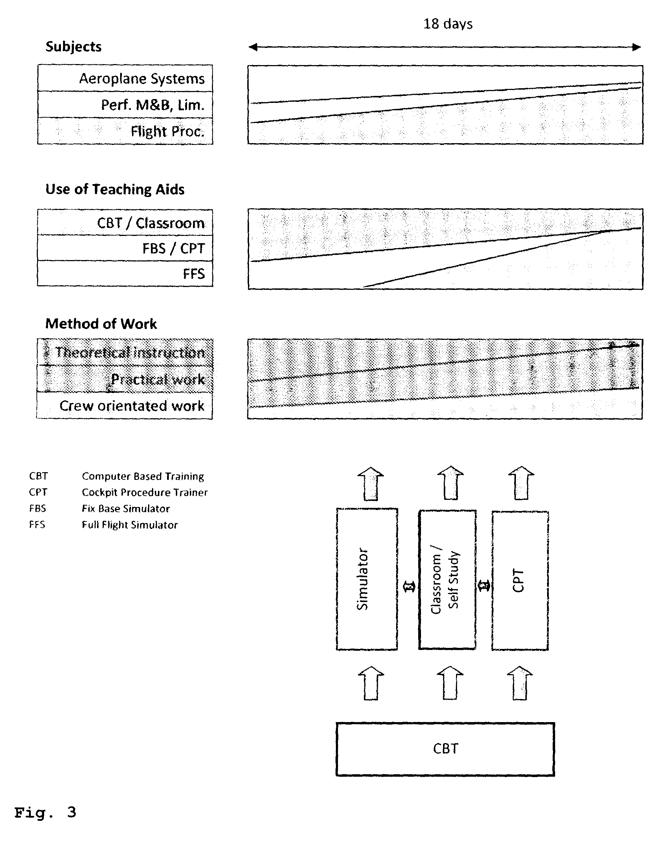

The new method allows running the training on the vehicle systems simultaneously from the beginning of the training. This enables the use of all training aids including the vehicle simulator from the start. The training becomes operator orientated and applies the view from an operational perspective towards the vehicle systems (inside-to-outside-approach). Therefore, the training becomes more realistic in regard to daily requirements of the operator. The learning is varied and therefore more interesting and is motivating for the operator as practical elements are present from the beginning. An exemplary schema of a training plan according to the PIT method is shown in **Fig. 3**.

It is therefore also possible for the trainee to work together with others as a team where required. The learning system for this approach is omnipresent and becomes part of all phases of the training.

In the appendix, an exemplary training item is shown in tables 1 and 2 dealing with a hydraulic system module. The goal is to train the appropriate parts of the system during different phases, thus giving a complete overview of the components and their function of different angles and aspects. The tables give an overview on how different sub-chapters within the module are being distributed throughout the training to complete the module.

To support the new teaching method, a new training system has to be established. As the learning system drives the new teaching method, the learning system has to interface with all other training aids and/or locations.

To achieve this, the invention provides devices, systems and methods according to the independent claims. Further aspects of the invention are addressed with the dependent claims.

In one aspect, the invention provides a method for computer based teaching of features, functioning and/or operation of a vehicle, comprising: simulating vehicle features, behavior, results of interactions and/or at least one failure scenario, storing training material, e.g. vehicle schematics, operation protocols, training examples, flow and/or operation charts, schedules, and/or workflows, accepting information on a training session, setting the vehicle simulation to a predefined state for the training session, accepting an user input representing an interaction of a user with the vehicle, determining the interaction's effect on the vehicle by the simulation, simulating the interaction and its effect on the vehicle, determining whether the interaction adheres to a protocol for the training session, e.g. whether the interactions performed to deal with a scenario adhere to the protocol for or are adequate for handling the scenario. In case the user interaction does not adhere to the protocol, the teaching unit can present to the user training material. The protocol may include a or be part of a procedure to be trained.

The training material can be stored for/on a teaching unit 31, 32, 33. The teaching unit 31, 32, 33 may set the vehicle simulation to a predefined state.

The simulation is either performed by a simulating unit 21, 22, 23 or provided at/to the teaching unit 31, 32, 33.

The protocol comprises at least one breakpoint. The breakpoint is at least one condition defining when a simulation is to be automatically influenced by the teaching unit 31, 32, 33. The influence may be in form of a change of simulation parameters or simulation data and. The simulation may be stopped, continued, stepped-through, or altered as a result from the influence.

The system can automatically present training material to the user, when a breakpoint is reached.

A vehicle control element important to the user in respect to training session/protocol/procedure may be accentuated/highlighted. The operational vehicle control element can be accentuated in respect to the protocol/procedure based on the training material.

The training material may be presented to the user upon request.

The teaching unit 31, 32, 33 can access the simulation of the simulating unit 21, 22, 23 to present to the user results of his interactions based on the simulation on the simulating unit 21, 22, 23.

The user interface can be a touch-screen displaying at least one vehicle control element.

The user interface or parts thereof may also be used for presenting the training material. The user can have access to the teaching unit 31, 32, 33 from the simulating unit 21, 22, 23 to access training material and/or to start/restart the simulation at the simulating unit 21, 22, 23 and/or access specific parts of the simulation protocol of a training session.

In another aspect, the invention provides a system for teaching features of a vehicle, comprising: a simulating unit 21, 22, 23 simulating vehicle features, a teaching unit 31, 32, 33 storing training material, e.g. vehicle schematics, operation protocols, training examples, flow and/or operation charts, schedules, and/or workflows, wherein the teaching unit 31, 32, 33 and the simulating unit 21, 22, 23 are connected and adapted to communicate with each other, wherein the teaching unit 31, 32, 33 is configured to set the simulation to a predefined state, to observe, and/or influence the simulation for a training session, and wherein the simulating unit 21, 22, 23 provides simulation data to the teaching unit 31, 32, 33.

The system may provide an interface accepting an user input representing an interaction of the user with the vehicle. An effect of the interaction on the vehicle can be determined by the simulation.

The teaching unit 31, 32, 33 may determine whether the interaction adheres to a protocol.

In case the user interaction does not adhere to the protocol/procedure, the teaching unit 31, 32, 33 can influence the simulation.

The training material may be presented to the user in relation to the protocol/procedure to support the user in learning to operate the vehicle according to the protocol/procedure.

The system can automatically present training material to the user, when a breakpoint is reached.

The teaching unit 31, 32, 33 may be connected to the simulating unit 21, 22, 23 through a network 41, 42, 43.

At least one client 13 can be connected to the simulating unit 21, 22, 23 and/or the teaching unit 31, 32, 33 adapted to access the simulation and the training material.

The training material may be presented by the teaching unit based on simulation data obtained from the simulating unit.

The teaching unit 31, 32, 33 can influence the simulating unit 21, 22, 23 through a command interface.

The system may be adapted to perform a method according to the method described above.

In yet another aspect, the invention provides a teaching unit 31, 32, 33, connected to a simulating unit 21, 22, 23, comprising: an interface for accessing simulation data simulating vehicle features of a simulating unit 21, 22, 23, a means for storing training material, e.g. vehicle schematics, operation protocols, training examples, flow and/or operation charts, schedules, and/or workflows, an interface for influencing the simulation of the simulating unit 21, 22, 23 in relation to a training session, e.g. for setting the simulation of the simulating unit to a predefined state.

The teaching unit 31, 32, 33 may comprise at least one of the following: a means for detecting an user input representing an interaction of a user with the vehicle, a means for determining the interaction's effect on the vehicle by the simulation of the simulating unit 21, 22, 23, a means for determining whether the interaction adheres to a protocol for the training session, and a means for presenting to the user training material in relation to the protocol.

A simulating unit 21, 22, 23, connected to a teaching unit 31, 32, 33, comprising: an interface for providing simulation data simulating vehicle features to the teaching unit 31, 32, 33, an interface for receiving training material, e.g. vehicle schematics, operation protocols, training examples, flow and/or operation charts, schedules, and/or workflows, means for controlling the simulation based on instructions received from the teaching unit 31, 32, 33 influencing the simulation of the simulating unit 21, 22, 23 in relation to a training session, e.g. for setting the simulation of the simulating unit to a predefined state.

The simulating unit 21, 22, 23 may comprise at least one of the following: a means for detecting an user input representing an interaction of a user with the vehicle, a means for determining the interaction's effect on the vehicle by the simulation, and a means for presenting to the user training material in relation to the protocol obtained from the teaching unit.

Further aspects and embodiments will become apparent from the figures and the following description.
- **Figs. 1a** and **1b**: illustrate a classical training concept according to the prior art.
- **Figs. 2a and 2b**: illustrate a another training concept according to the prior art.
- **Fig. 3**: illustrates the training according to the invention.
- **Fig. 4**: is a diagram illustrating connections and interactions of a system set-up on basis of the invention.
- **Fig. 5**: illustrates exemplary setups of the invention.

The learning system therefore is or includes a teaching unit which has access to training material. The training material includes procedures that should be trained as well as other information and instructions related to the target vehicle as they are available today. The training material may also include checklists, diagrams, sequences, etc.

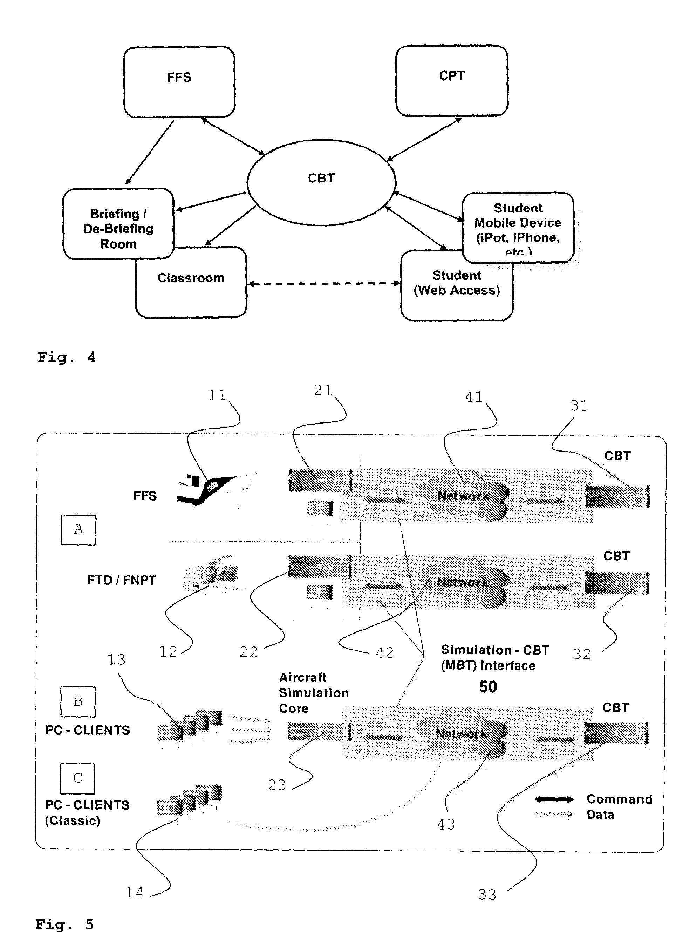

The teaching unit interfaces with the simulating unit of a vehicle simulator. An exemplary schematically overview on the general architecture can be seen in **Fig. 4**. In this figure, the learning system/teaching unit is the CBT, while the simulating unit is included in an FFS and/or CPT. The figure also shows that the training material may be accessed from various devices, such as mobile communication terminals, and from various locations.

The training material is stored for and/or by the teaching unit and provided to trainees by the teaching unit. It may also be accessed via internet trough clients or through other devices such as mobile communication devices (e.g. iPhone, Tablet PC, Laptop, ...).

The teaching unit provides instructions and training material to the trainees, enabling the trainees to progress at the trainee's own pace within a time limit specified for the training. The teaching unit ensures that teaching subjects are fully covered and progress to a new subject or session can be denied until a satisfactory assimilation of knowledge on a certain topic has been demonstrated (e.g. through test results). The teaching unit may also allow self study or distance learning. When the teaching unit is used as part of the theoretical knowledge instruction phase, the teaching unit may assist the trainee in areas of difficulty for the trainee.

In general, teaching unit should be thought of being a replacement for an instructor.

While, as described above, in classical training the theoretical training is separated from the practical training, the invention allows providing a vehicle simulation throughout the training no matter if the teaching unit is accessed, e.g., in a computer based training, from the vehicle simulator or even from a computer connected via the internet. The goal is to always have a simulation in the background. Further, there is a direct interaction between the simulating unit and the teaching unit.

This allows for a number of additional possibilities. First, it is now possible to access training material that is stored for the teaching unit directly from the vehicle simulator as the simulating unit is connected to the teaching unit. In fact, the trainee is able to access all training material provided by the teaching unit from the vehicle simulator. The teaching unit can also interact with the simulating unit and/or the vehicle simulator when training material is presented.

The teaching unit, in turn, is able to influence and/or control the simulation by the simulating unit and the vehicle simulator. In particular, the teaching unit is able to automatically observe the actions of the trainee and the behavior of the vehicle simulator. This can be achieved by the teaching unit through observation of data and/or parameters presented by the simulating unit. The simulating unit can also send simulating data or results of the simulation to the teaching unit.

Hence, the teaching unit is for example able to define a predetermined state for the simulation and hence for the vehicle simulator, e.g. an initial/staring state for a training session. For example, if the trainee arrives at a point where the next step in the training is to learn the behavior of an aircraft and its hydraulic systems at great heights, the teaching unit instructs the simulating unit to put the vehicle simulator in a respective state by adjusting the parameters of the simulation and by adjusting vehicle control elements of the vehicle simulator (switches, displays, environmental representation) respectively.

In a training scenario, the trainee can access the training sessions from the vehicle simulator. The trainee is hence able to train specific procedures independently. For example, after training one procedure starting from an initial state set by the teaching unit, the trainee is able to access another training session to train another procedure. For this other procedure, the teaching unit then again sets the initial state. The trainee can also access the teaching unit to retrieve information on vehicle control elements. The training unit can guide the trainee by presenting training material and/or interact with the vehicle control elements.

Further, it is possible to define a number of so called breakpoints for a training session. The breakpoints are conditions that are checked and observed by the teaching unit. In case a condition or a number of conditions is/are met, the teaching unit is able to influence the behavior of the simulation (and also of the vehicle simulator), even during the simulation (e.g., by changing parameters and/or data of the simulation). All aspects of the target vehicle simulated by the simulating unit can serve as a basis for the breakpoints, any or any number of parameters and/or data used in the simulation.

When a breakpoint is reached, i.e. when a condition or certain conditions is/are met, the teaching unit can influence the simulation in various ways. The teaching unit can for example observe whether the trainee operates the simulated vehicle according to a protocol for the training session and/or a procedure. Hence, when the teaching unit detects that the trainee deviates from the procedure, the teaching unit may influence the simulation and may present to the trainee training material related to the current training session. For example, the teaching unit may re-capture the steps required by the procedure and guide the trainee through the steps required to successfully complete the procedure/training session.

For this, and generally, the teaching unit can also instruct the vehicle simulator to accentuate elements in the vehicle simulator, e.g. to highlight panels, displays, screen elements, vehicle control elements, etc. The accentuation can also be more complex, e.g. when the elements or parts thereof are presented by screens/touch screens. The relationship between elements may be illustrated, but also instructional videos, pictures or other media can be presented to the trainee.

The accentuation can also be used to focus the attention of the trainee on particular elements in the flight simulator. This can for example also be used in an introductory portion of a training session, in which parts of the vehicle that ought to be used in the training session are explained.

The teaching unit may also instruct the simulating unit to start or continue, to stop (or freeze) the stimulation but also to manipulate specific operational elements of the vehicle such as switches or other input devices during the simulation.

On the other hand, when the trainee uses the teaching unit for training, i.e. when accessing the teaching unit when not being in the simulator, the trainee is also able to interact with simulated vehicle elements, e.g. by touch-screen or other input devices (vehicle control elements, or representations thereof, connected to the teaching unit) .

It is then possible for the teaching unit to access the simulating unit in order to simulate the results of the trainee's interaction with the input devices. As a result, the teaching unit presents to the trainee the simulated result of his interaction based on the vehicle simulation. This allows the trainee to practice procedures even outside the vehicle simulator, as the correct, i.e. simulated results, can be provided to the trainee.

It is hence required that the simulating unit and the teaching unit exchange information on the simulation state and the training that should be performed by the trainee.

Steps of an exemplary training session are described in the following:
1. The trainee logs into the teaching unit (either directly, from the vehicle simulator, or by other means).
2. The trainee selects a training or is assigned a specific training task.
3. The teaching unit initializes a predefined simulation state.
4. The vehicle controls and the vehicle simulator are set to the predefined state.
5. The simulation is started.
6. The teaching unit observes the simulation (this can be done by sending simulation related information to the teaching unit by the simulating unit in predefined intervals. The information transmitted might only contain simulation data related to the conditions to be observed for breakpoints set for the training session/procedure to be trained).
7. The teaching unit changing parameters of the simulation (e.g. by sending instructions from the teaching unit to the simulating unit. This is done for example to alter the sate of vehicle controls, e.g. to render them functionless in order to simulate a failure scenario).
8. In case the trainee deviates from a specified protocol for the training session, and/or in case a breakpoint is reached, the simulating unit informs the teaching unit on the deviation.
9. The teaching unit then stops the simulation and presents to the trainee (either automatically or upon request) training material in relation to the teaching session or the section of the protocol/procedure in which the deviation from the protocol was made/the section of the protocol/procedure in which the breakpoint was reached.
10. In case more than one event caused the stop of the simulation, all events can be explained by the teaching unit to the trainee in an order suitable for the training. Also vehicle control elements important for the training session can be accentuated. The teaching unit can then explain to the trainee the current situation and required procedure steps (for example, there can be flow charts presented to the trainee explaining the connection between the different vehicle controls and to show sequences in which the controls have to be used).
11. When the explanation by the teaching unit is completed, the training session can be continued or re-started.

It is also intended that the teaching unit commends the trainee when a training session or procedure was completed correctly.

It is hence clear from the above description that the teaching unit is coupled to the simulating unit through an communications interface 50 (Simulation - CBT (MBT) Interface). The communications interface 50 allows the teaching unit to control the simulating unit. Simulation data and simulation results can be transferred to the teaching unit and can be used for illustration purposes of states and vehicle systems.

While normally the simulating unit is close to or integrated into the vehicle simulator, it also possible to provide the simulating unit separate from the vehicle simulator. In fact, the simulating unit can be provided without a vehicle simulator, e.g. as an Aircraft Simulation Core (ASC). This allows accessing the simulation without the requirement of having an actual vehicle simulator. The clients are then used to present to the trainee a, maybe limited, representation of the vehicle.

Similarly, the teaching unit may be divided into a number teaching unit members and may be placed distant or close to the simulating unit. Both, teaching unit and simulating unit, can also realized by multiple hardware units.

However, as the vehicle is actually simulated, realistic training scenarios can be achieved and the trainees are always able to test the results of their interaction with the vehicle. For example, a client can show a virtual cockpit to the trainee and the trainee can for example use input devices (even mouse and keyboard) to interact with the virtual controls. In addition, the teaching unit allows the trainee to access the training material. On the other hand, the teaching unit can control the simulation on the simulating unit as if an actual simulator would be connected to the simulating unit and hence the trainee has the same possibilities for training as on an actual vehicle simulator. The results are hence not just predefined and played-back by the teaching unit, but are simulation based.

In summary, the communications interface 50 allows to use the information stored for the teaching unit in the vehicle simulator and, on the other hand, to supply to the teaching unit real simulation data. The teaching unit observes the training, can correct it, and may show to the trainee how the procedure is performed correctly.

As the simulation runs in real time, some events might happen in parallel or very fast so that the trainee is unable to realize what happened. Hence, the teaching unit is able to re-play the simulation and to explain to the trainee what has happened. It is therefore possible for the trainee to control the training progress.

The teaching unit can also be used by others to follow the actions of the trainee.

The system described here may also be used for training of engineers, cabin crews, and/or any other operator of any other vehicle.

**Fig. 5** illustrates exemplary setups of the inventive system. In section **A** of **Fig. 5** vehicle simulators 11, 12 (FFS, FTD, FNPT) with respective simulating units 21, 22 are shown. The respective vehicle simulator 11, 12 and/or the simulating unit 21, 22 are connected to the respective teaching units 31, 32 (CBT). This connection may be facilitated via a network 41, 42, which transports simulation data and commands/instructions between the simulating unit 21, 22 and the teaching unit 31, 32. The communication between the simulating unit 21, 22 and the teaching unit 31, 32 is facilitated by the communications interface 50.

In section **B** of **Fig. 5** a simulating unit 23 (Aircraft Simulation core, ASC) is provided without an actual vehicle simulator. Clients 13 connected (directly or indirectly) to the simulating unit 23 are able to access the information provided by the teaching unit 33 and to obtain respective simulation results from the simulating unit 23 as described above. The clients 13 may be equipped with additional input devices such as control panels or displays. The communication between the simulating unit 23 and the teaching unit 33 is facilitated by the communications interface 50.

Based on the actual setup for the system, the communications interface 50 may be altered to adapt it for the setup.

Additionally, as shown in section **C** of Fig. 5, there might also be clients 14, which are connected to the network 43, which only access information provided by the teaching unit 33.

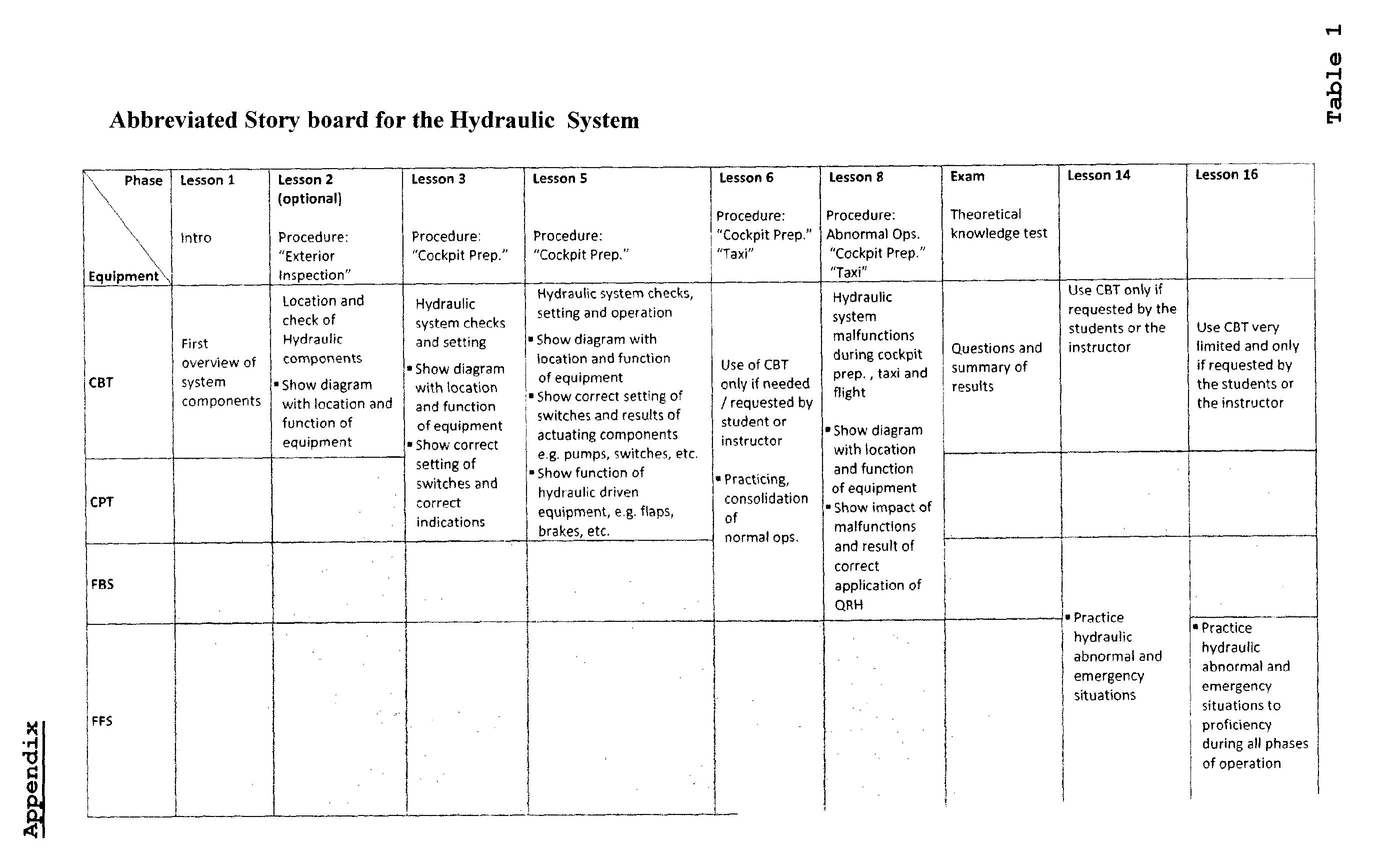

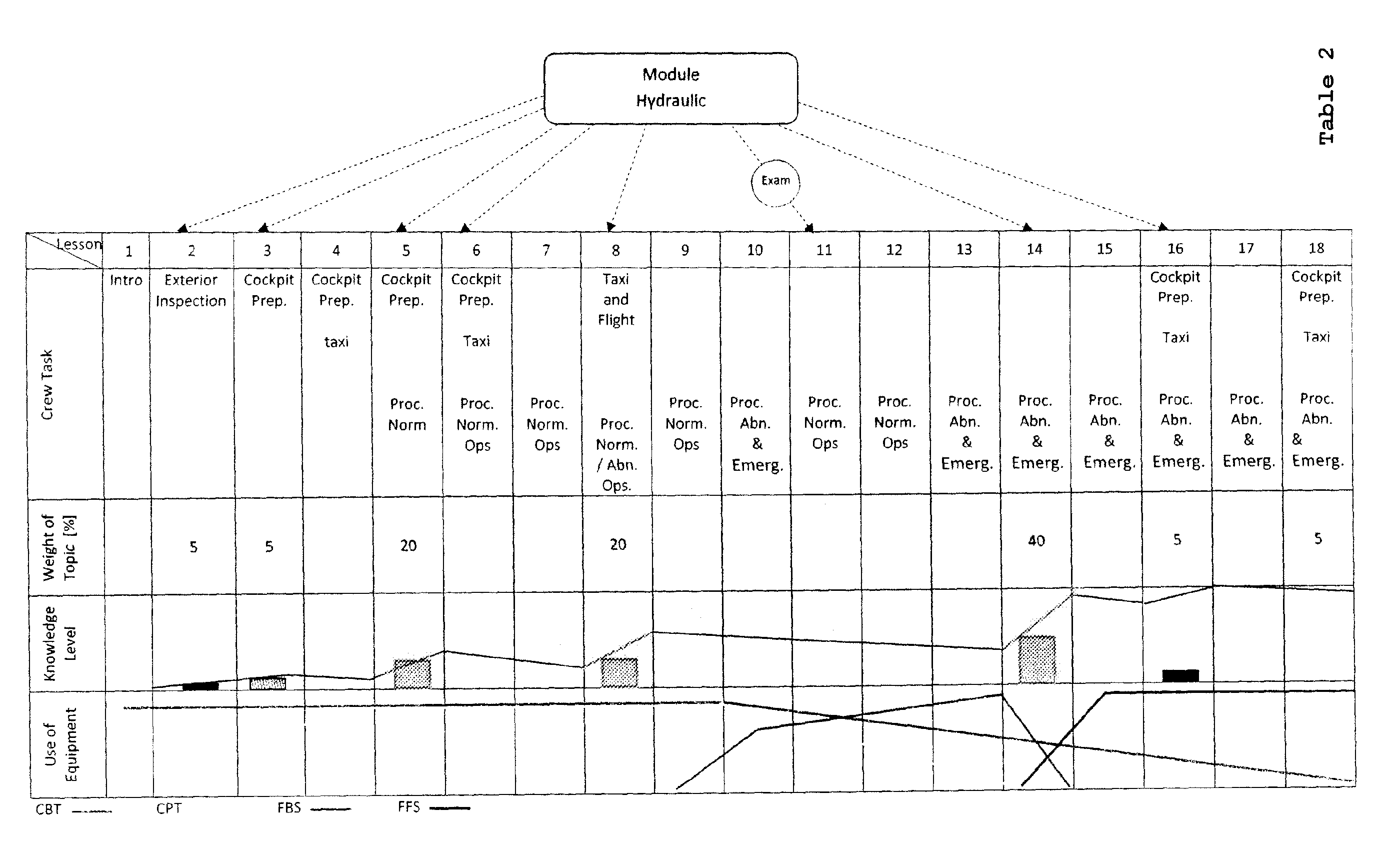

## Claims

1. A method for computer based teaching of features, functioning and/or operation of a vehicle, comprising:
- simulating vehicle features, behavior, results of interactions and/or at least one failure scenario,
- storing training material, e.g. vehicle schematics, operation protocols, training examples, flow and/or operation charts, schedules, and/or workflows,
- accepting information on a training session,
- setting the vehicle simulation to a predefined state for the training session,
- accepting an user input representing an interaction of a user with the vehicle,
- determining the interaction's effect on the vehicle by the simulation,
- simulating the interaction and its effect on the vehicle,
- determining whether the interaction adheres to a protocol for the training session, e.g. whether the interactions performed to deal with a scenario adhere to the protocol for handling the scenario, and,
- in case the user interaction does not adhere to the protocol, influencing the simulation.

2. The method of claim 1, wherein the teaching unit (31, 32, 33) sets the vehicle simulation to a predefined state and/or influences the simulation, and/or wherein the simulation is either performed by a simulating unit (21, 22, 23) or provided at/to the teaching unit (31, 32, 33).

3. The method of claim 1 or 2, wherein the protocol comprises at least one breakpoint, and wherein the breakpoint is at least one condition defining when a simulation is to be influenced, and/or
wherein the system presents training material to the user, when a breakpoint is reached.

4. The method of any one of the preceding claims, wherein a vehicle control element important to the user in respect to training session is accentuated, and/or wherein the vehicle control element is accentuated in respect to the protocol.

5. The method of any one of the preceding claims, wherein the teaching unit (31, 32, 33) accesses the simulation of the simulating unit (21, 22, 23) to present to the user results of his interactions based on the simulation on the simulating unit (21, 22, 23), and/or
wherein a user interface 50 or parts thereof is also used for presenting training material, and wherein the user has access to the teaching unit (31, 32, 33) from the simulating unit (21, 22, 23) and/or a vehicle simulator (11, 22) to access training material and/or to influence the simulation of the simulating unit (21, 22, 23).

6. A system for teaching features of a vehicle, comprising:
- a simulating unit (21, 22, 23) simulating vehicle features,
- a teaching unit (31, 32, 33) storing training material, e.g. vehicle schematics, operation protocols, training examples, flow and/or operation charts, schedules, and/or workflows,
- wherein the teaching unit (31, 32, 33) and the simulating unit (21, 22, 23) are connected and adapted to communicate with each other,
- wherein the teaching unit (31, 32, 33) is configured to set the simulation to a predefined state, to observe, and/or influence the simulation for a training session, and
- wherein the simulating unit (21, 22, 23) provides simulation data at/to the teaching unit (31, 32, 33).

7. The system of claim 6, wherein
the system provides an interface accepting an user input representing an interaction of the user with the vehicle, wherein an effect of the interaction on the vehicle is determined by the simulation, wherein the teaching unit (31, 32, 33) determines whether the interaction adheres to a protocol.

8. The system of claim 5 or 6, wherein,
in case the user interaction does not adhere to the protocol, the teaching unit (31, 32, 33) influences the simulation.

9. The system of any one of the preceding claims, wherein the system is adapted to perform a method according to any one of the claims 1 to 5.

10. The system of any one of the preceding claims, wherein the teaching unit (31, 32, 33) is connected to the simulating unit (21, 22, 23) through a network (41, 42, 43), and/or
wherein at least one client (13) is connected to the simulating unit (21, 22, 23) and/or the teaching unit (31, 32, 33) adapted to access the simulating unit (21, 22, 23) and the teaching unit (31, 32, 33).

11. The system of any one of the preceding claims, wherein the teaching unit (31, 32, 33) influences the simulating unit (21, 22, 23) through a command interface.

12. A teaching unit (31, 32, 33), connected to a simulating unit (21, 22, 23), comprising:
- an interface for accessing simulation data simulating vehicle features of a simulating unit (21, 22, 23),
- a means for storing training material, e.g. vehicle schematics, operation protocols, training examples, flow and/or operation charts, schedules, and/or workflows,
- an interface for influencing the simulation of the simulating unit (21, 22, 23) in relation to a training session, e.g. for setting the simulation of the simulating unit (21, 22, 23) to a predefined state.

13. The teaching unit (31, 32, 33) of claim 14, comprising at least one of the following:
- a means for detecting an user input representing an interaction of a user with the vehicle,
- a means for determining the interaction's effect on the vehicle by the simulation of the simulating unit (21, 22, 23),
- a means for determining whether the interaction adheres to a protocol for the training session, and
- a means for presenting to the user training material in relation to the protocol.

14. A simulating unit (21, 22, 23), connected to a teaching unit (31, 32, 33), comprising:
- an interface for providing simulation data simulating vehicle features at/to the teaching unit (31, 32, 33),
- an interface for receiving training material, e.g. vehicle schematics, operation protocols, training examples, flow and/or operation charts, schedules, and/or workflows,
- means for controlling the simulation based on instructions received from the teaching unit (31, 32, 33) influencing the simulation of the simulating unit (21, 22, 23) in relation to a training session, e.g. for setting the simulation of the simulating unit (21, 22, 23) to a predefined state.

15. The simulating unit (21, 22, 23) of claim 14, comprising at least one of the following:
- a means for detecting an user input representing an interaction of a user with the vehicle,
- a means for determining the interaction's effect on the vehicle by the simulation, and
- a means for presenting to the user training material in relation to the protocol obtained from the teaching unit (31, 32, 33).
